# FASCICULE DE BREVET EUROPEEN

(11) **EP 3 746 209 B1**
(45) Date de publication et mention de la délivrance du brevet: **16.02.2022**
(21) Numéro de dépôt: 18833685.3
(22) Date de dépôt: 06.12.2018
(51) Int. Cl.: B01D 46/24, B01D 35/02, B01D 35/04, B01D 46/00, B01D 29/085, E04H 4/12

(54) **FILTRE POUR DISPOSITIF DE FILTRATION**
FILTER FÜR FILTRATIONSVORRICHTUNG
FILTER FOR FILTRATION DEVICE

(30) Priorité: 02.02.2018 FR 1870118
(43) Date de publication de la demande: 09.12.2020
(73) Titulaire: ABP - AQUILINA BOUVIER POOL, 26140 Albon (FR)
(72) Inventeur: AQUILINA, Yann, 13360 ROQUEVAIRE (FR); BOUVIER, Matthieu, 26140 ALBON (FR)
(74) Mandataire: Le Goaller, Christophe
(86) Numéro de dépôt international: PCT/FR2018/053146
(87) Numéro de publication internationale: WO 2019/150006

(56) Documents cités:
- WO-A1-2017/167456
- DE-U1-202008 017 060
- NL-A- 9 002 451
- US-A1- 2003 213 743

## Description

### DOMAINE TECHNIQUE

La présente invention concerne un filtre destiné à être disposé dans un dispositif de filtration d'eau, par exemple dans un écumeur de piscine, usuellement désigné par le terme skimmer.

### ART ANTERIEUR

Les dispositifs de filtration pour piscines de type skimmer comportent généralement un premier étage de filtration comportant un filtre d'entrée faisant office de pré-filtre. De tels dispositifs de filtration sont connus de DE 20 2008 017060 U1, WO 2017/167456 A1, US 2003/213743 A1 et NL 9 002 451 A. Actuellement chaque modèle de skimmer possède son propre modèle de filtre d'entrée. Chaque fabricant de skimmer possède plusieurs modèles de skimmers différents. Les skimmers comportent un conduit d'admission dont la géométrie varie selon le modèle, en particulier le diamètre et la hauteur. Le nombre total de modèles de filtres d'entrée est aujourd'hui élevé, ce qui pose des difficultés liées au remplacement de filtres équipant des modèles anciens. En effet, les vendeurs professionnels de matériel de piscine ne peuvent pas disposer de l'ensemble des références convenant aux différents modèles de skimmer. Cela entraîne des délais d'approvisionnement longs et des coûts de remplacement élevés.

Or, un filtre d'entrée est nécessaire au bon fonctionnement d'un skimmer. En effet, le filtre permet de retenir des végétaux, des insectes ou autres éléments solides. Sans filtre disposé au niveau de l'admission, ces éléments pénètrent dans le skimmer, ce qui nuit à son fonctionnement.

Les inventeurs ont conçu un filtre pouvant faire office de filtre d'entrée, et s'adaptant à différents modèles de skimmers. L'invention permet de se procurer le filtre, et de l'utiliser sur des conduits d'admission de différentes dimensions, en particulier de différents diamètres.

### EXPOSE DE L'INVENTION

Un premier objet de l'invention est un filtre, destiné à être inséré dans un système de filtration d'eau, le système de filtration présentant un conduit d'admission s'étendant autour d'un axe d'admission, selon un diamètre d'admission, le conduit d'admission étant configuré pour collecter l'eau à filtrer, le filtre s'étendant autour d'un axe longitudinal, et comportant :
- une extrémité supérieure annulaire, délimitant une ouverture autour de l'axe longitudinal, pour permettre une admission d'eau dans le filtre, l'extrémité supérieure définissant un diamètre ;
- une paroi inférieure, formant un fond du filtre, s'étendant face à l'ouverture ;
- une paroi latérale, s'étendant entre l'extrémité supérieure et la paroi inférieure, autour de l'axe longitudinal;
- la paroi latérale et/ou la paroi inférieure comportant des orifices, de façon à permettre un écoulement de l'eau à travers les orifices et à retenir des éléments solides, dont la taille est supérieure à une taille de filtration, définie par les orifices ;
   le filtre étant caractérisé en ce que la paroi latérale comporte :
- une pluralité de bras, chaque bras s'étendant entre un bord inférieur relié à la paroi inférieure, et un bord supérieur, le bord supérieur formant une partie de l'extrémité supérieure annulaire ;
- chaque bras s'étendant, de la paroi inférieure vers l'extrémité supérieure, en s'écartant de l'axe longitudinal selon une inclinaison, l'inclinaison entre chaque bras et l'axe longitudinal étant ajustable, de façon que le diamètre de l'extrémité supérieure est variable en fonction de l'inclinaison de chaque bras ;
- une paroi complémentaire, s'étendant entre chaque bras ;
de telle sorte que lorsque le filtre est inséré dans le conduit d'admission, l'axe longitudinal étant parallèle à l'axe d'admission, l'inclinaison des bras est ajustée, et notamment réduite, de façon que le diamètre de l'extrémité supérieure est adapté au diamètre d'admission.

Le filtre peut comporter l'une des caractéristiques suivantes, prises isolément ou en combinaison :
- Chaque bras est tel qu'en l'absence de contrainte exercée sur un bras, il tend à s'étendre, par rapport à l'axe longitudinal, selon un angle d'inclinaison, dit angle d'inclinaison au repos. L'angle d'inclinaison au repos est de préférence compris entre 20° et 60°.
- La paroi inférieure présente un diamètre inférieur au diamètre de l'ouverture.
- La paroi complémentaire comporte des tronçons élémentaires, chaque tronçon élémentaire s'étendant entre deux bras adjacents, en étant relié à ces derniers.
- Au moins un tronçon élémentaire comporte des orifices de façon à permettre l'écoulement de l'eau à travers ces derniers.
- Au moins deux bras sont reliés à un moyen d'ajustement, pour rapprocher ou éloigner les bras de l'axe longitudinal.
- Le moyen d'ajustement peut comporter un câble, dont l'actionnement permet de rapprocher ou d'éloigner les bras de l'axe longitudinal.
- La paroi complémentaire est formée par une membrane filtrante, s'étendant entre chaque bras, la membrane filtrante pouvant s'appuyer sur les bras. La membrane filtrante peut être souple. Elle peut être amovible.
- Deux bras peuvent présenter, au niveau de leur bord supérieure, une gorge, configurée de telle sorte que le câble peut glisser dans la gorge. La gorge peut s'étendre à la périphérie de l'extrémité annulaire. Si l'intérieur du filtre est délimité par la paroi latérale et la paroi inférieure, la gorge peut s'étendre à l'extérieur du filtre.
- Le filtre comporte au moins un pied, relié à la paroi inférieure, la paroi inférieure s'étendant entre le pied et chaque bras, le pied étant configuré pour s'appuyer à l'intérieur du conduit d'admission.

Un deuxième objet de l'invention est un procédé d'insertion d'un filtre, selon le premier objet de l'invention, dans un conduit d'admission d'un système de filtration, le conduit d'admission s'étendant autour d'un axe d'admission, selon un diamètre d'admission, le procédé comportant:
- un ajustement du diamètre du filtre en rapprochant les bras du filtre de l'axe longitudinal du filtre, de façon à obtenir un diamètre, de l'extrémité supérieure, inférieur au diamètre d'admission ;
- une insertion du filtre dans le conduit d'admission, l'axe longitudinal du filtre étant confondu avec l'axe d'admission, l'insertion étant telle que la paroi inférieure du filtre est disposée à un niveau plus bas, par rapport à la verticale, que l'extrémité supérieure;
- après l'insertion, un relâchement des bras, de telle sorte que les bras tendent à s'écarter de l'axe longitudinal, pour venir s'appuyer contre le conduit d'admission.

L'ajustement est réalisé préalablement à l'insertion.

Le conduit peut comporter un épaulement, correspondant à une réduction du diamètre d'admission. Le filtre peut alors reposer sur l'épaulement.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

Les figures 1A, 1B et 1C représentent un premier mode de réalisation de l'invention.
La figure 2 illustre un deuxième mode de réalisation de l'invention.
Les figures 3A, 3B et 3C représentent un troisième mode de réalisation de l'invention.
Les figures 4A, 4B et 4C représentent un quatrième mode de réalisation de l'invention.

### EXPOSE DE MODES DE REALISATION PARTICULIERS

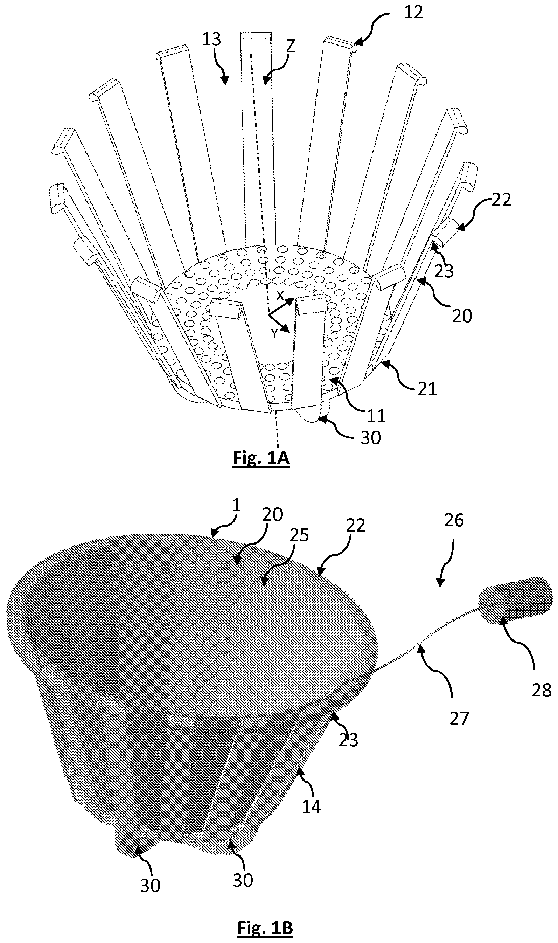

On a représenté, sur les figures 1A à 1C, un premier mode de réalisation d'un filtre 1 selon l'invention. Il est destiné à être introduit dans le conduit d'admission 2 d'un module de filtration ou skimmer. Selon ce mode de réalisation, le filtre comporte un corps représenté sur la figure 1A. Le corps du filtre comporte une paroi inférieure 11, formant un fond de filtre. La paroi inférieure 11 s'étend autour d'un axe longitudinal Z.

Dans cet exemple, la paroi inférieure 11 s'étend selon un plan radial XY, perpendiculaire à l'axe longitudinal Z. La paroi inférieure est de préférence parallèle ou sensiblement parallèle au plan radial XY. Par sensiblement parallèle, on entend parallèle selon une tolérance angulaire de +/-30°. De préférence, la paroi inférieure 11 est symétrique par rapport à l'axe longitudinal Z. La paroi inférieure 11 peut être pleine ou comporter des orifices, ces derniers étant destinés à recueillir des éléments solides que l'on souhaite retenir dans le filtre. Les éléments solides peuvent notamment être des végétaux, des insectes, ou des cailloux, ou d'autres éléments solides qu'il convient de retenir. La taille des orifices détermine la dimension de filtration, c'est-à-dire la dimension minimale des éléments que l'on souhaite retenir. Ainsi, les orifices peuvent avoir un diamètre, ou une plus grande diagonale, comprise entre quelques µm, par exemple 10 µm, à 1 ou 2 cm.

La paroi inférieure 11 peut être plane, ou comporter une partie tronconique.

Le corps du filtre comporte également des bras 20, reliés à la paroi inférieure 11, et s'étendant vers une extrémité supérieure 12, de forme annulaire. L'extrémité supérieure 12 s'étend autour de l'axe longitudinal Z. Chaque bras 20 est relié à la paroi inférieure 11 par une bordure (ou bord) inférieure 21. Chaque bras 20 s'étend entre la bordure inférieure 21 et une bordure supérieure (ou bord) 22. Les bordures supérieures 22 de chaque bras 20 forment une partie de l'extrémité supérieure 12 du filtre 1. L'extrémité supérieure 12 délimite une ouverture 13, à travers laquelle l'eau à filtrer pénètre dans le filtre. L'extrémité supérieure 12 peut avoir une forme circulaire ou polygonale.

Les bras 20 forment une partie d'une paroi latérale 14 du filtre 1. La paroi latérale 14 est une paroi annulaire, s'étendant transversalement à la paroi inférieure 11, autour de l'axe longitudinal Z. L'espace délimité par la paroi latérale 14, la paroi inférieure 11 et l'extrémité supérieure 12 correspond à l'intérieur du filtre 1.

La paroi inférieure 11 définit un diamètre, inférieur ou égal au diamètre de l'extrémité supérieure 12.

Dans l'exemple décrit en lien avec les figures 1A à 1C, les bras 20 sont réalisés selon un matériau plein. Il peut s'agir de plastique ou d'un métal léger. Le recours au plastique permet de réduire le coût de fabrication.

Dans cet exemple, la bordure supérieure 22 de chaque bras forme un repli, orienté vers l'extérieur du filtre 1, de façon à ménager une gorge périphérique 23 s'étendant autour de chaque bras.

Une membrane filtrante 25 peut être maintenue par les bras 20, comme représenté sur la figure 1B. Sur cette figure, la membrane filtrante 25 est déposée à l'intérieur du filtre 1, c'est-à-dire dans l'espace délimité par la paroi inférieure 11 et les bras 20. La membrane filtrante 25 est appliquée contre les bras 20, jusqu'à leur bordure supérieure 22, ainsi que contre la paroi inférieure 11. La membrane filtrante 25 peut être amovible. Cela permet de la retirer pour procéder à son nettoyage. La membrane filtrante 25 peut être fixée au niveau de la bordure supérieure 22 de chaque bras. Elle peut par exemple être fixée par un anneau élastique s'étendant dans la gorge 23. La membrane filtrante 25 définit également une taille de filtration du filtre 1.

La membrane filtrante 25 est une paroi complémentaire, qui, avec les bras 20, forment la paroi latérale 14 du filtre. Dans ce mode de réalisation, les bras 20 ont une fonction de support, tandis que la membrane filtrante 25, supportée par les bras, a une fonction de filtration. Dans cet exemple, la membrane filtrante 25 est souple, de façon à ce qu'elle puisse épouser la forme de la paroi inférieure 11 et des bras 20. Elle peut alors s'adapter à une variation de l'inclinaison des bras par rapport à l'axe longitudinal Z, décrite ci-après.

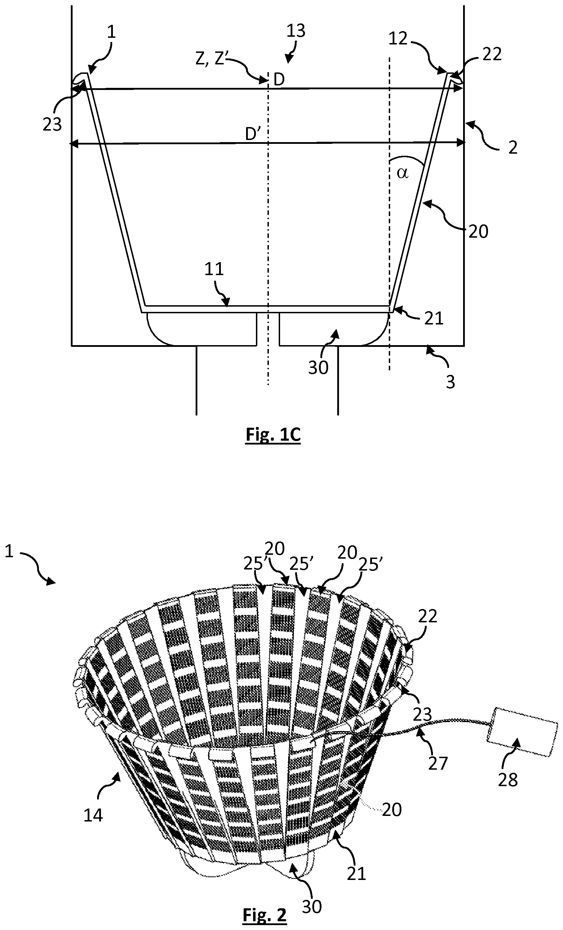

Sur la figure 1B, on a également représenté un moyen d'ajustement 26, permettant l'ajustement de la dimension du filtre 1. L'élément de réglage comporte un câble 27, s'étendant dans la gorge périphérique 23, et pouvant glisser dans cette dernière. Le câble 27 s'engage dans un élément de maintien 28, ce dernier permettant de maintenir le câble 27. Un utilisateur peut saisir l'élément de maintien 28 et éloigner le corps du filtre de l'élément de maintien. Cela a pour effet de réduire la longueur de câble 27 engagée dans la gorge périphérique 23. Cela permet d'ajuster la dimension du filtre 1, comme décrit plus précisément en lien avec la figure 1C. L'élément de maintien 28 peut notamment se présenter sous la forme d'un manchon. Il est ainsi aisément accessible et manipulable par un utilisateur.

Comme représenté sur la figure 1C, chaque bras forme un angle d'inclinaison α par rapport à l'axe longitudinal Z. L'inclinaison de chaque bras 20 est telle que chaque bras s'écarte progressivement de l'axe longitudinal Z, de la bordure inférieure 21 vers la bordure supérieure 22. L'angle d'inclinaison a est ajustable pour chaque bras, et peut varier entre 0° et 45° voire 0° à 60°, voire davantage. Lorsque l'angle d'inclinaison est de 0°, le bras est parallèle à l'axe longitudinal Z.

Quel que soit le mode de réalisation, le filtre est tel qu'au repos, c'est-à-dire sans contrainte exercée sur les bras 20, ces derniers s'étendent en formant, par rapport à l'axe longitudinal Z, un angle au repos ao. L'angle au repos α₀ est par exemple compris entre 20° ou 30°, et 60°, voire davantage. Chaque bras 20 peut être déformable, ce qui permet un ajustement de l'inclinaison a, et plus particulièrement une réduction de cette dernière. De façon alternative, chaque bras peut être rigide, l'ajustement de l'inclinaison étant effectué au niveau de la bordure inférieure 21. La bordure inférieure 21 de chaque bras 20 est alors agencée de façon à autoriser une rotation du bras autour d'un axe de rotation situé dans le plan radial XY. La rotation du bras 20 permet à ce dernier de se rapprocher ou de s'éloigner de l'axe longitudinal Z. En l'absence de contrainte, les bras 20 tendent à se rapprocher de leur position au repos, en raison de l'élasticité des bras ou de la jonction entre les bras 20 et la paroi inférieure 10. Dans la position au repos, l'angle d'inclinaison a des bras, par rapport à l'axe longitudinal Z, correspond à l'angle au repos ao. En d'autres termes, lorsque l'inclinaison des bras est modifiée par rapport à l'angle d'inclinaison au repos, en appliquant une contrainte sur ces derniers, la déformation des bras, par rapport leur position au repos, est élastique. Lorsque la contrainte cesse, les bras 20 tendent à s'incliner selon l'angle d'inclinaison au repos α₀.

Les bras 20 s'étendent autour de l'axe longitudinal Z. Leur bordure inférieure 21 est disposée à la périphérie de la paroi inférieure 11, ou à une distance inférieure à 2 ou 3 cm de ladite périphérie.

Comme représenté sur la figure 1C, l'inclinaison des bras 20 permet de modifier le diamètre D du filtre 1. Par diamètre du filtre, il est entendu le diamètre maximal du filtre 1. Dans les exemples représentés, le diamètre du filtre correspond au diamètre de l'extrémité supérieure annulaire 12. Plus l'angle d'inclinaison a est élevé plus le diamètre D du filtre augmente. L'ajustement du diamètre, par le réglage de l'inclinaison des bras 20, permet d'ajuster le diamètre D du filtre 1 par rapport à un diamètre D' du conduit d'admission 2.

Lorsque l'extrémité supérieure 12 n'est pas circulaire, le diamètre de l'extrémité supérieure 12, correspond à un diamètre d'un cercle dans lequel elle est inscrite.

Dans sa position au repos, le filtre 1 présente un diamètre D plus élevé que le diamètre D' du conduit d'admission 2. Sous l'effet de l'ajustement de l'inclinaison des bras, en resserrant le câble 27, le diamètre D du filtre est réduit, ce qui autorise l'introduction du filtre 1 dans le conduit d'admission 2. Après que le filtre 1 a été introduit dans le conduit 2, la contrainte exercée par le câble 27 sur les bras 20 est relâchée. Les bras 20 tendent alors à s'écarter de l'axe longitudinal Z, vers leur inclinaison au repos. Ils s'appuient ainsi contre la paroi interne du conduit d'admission. Cet appui permet de permet de maintenir le filtre 1. Le diamètre D du filtre 1 correspond alors au diamètre D' du conduit d'admission 2.

Le filtre 1 peut également comporter des pieds 30, reliés à la paroi inférieure 11. La paroi inférieure 11 est disposée entre chaque pied 30 et les bras 20. Chaque pied 30 permet à la paroi inférieure 11 de reposer sur un support 3 disposé à l'intérieur du conduit d'admission. Le support 3 peut par exemple être un épaulement ménagé dans le conduit d'admission 2, réduisant le diamètre de ce dernier. De préférence, chaque pied 30 prend la forme d'une plaque orientée parallèlement à l'axe longitudinal Z. Dans les exemples représentés dans les figures 1C, 2 et 3C, les pieds prennent la forme de six plaques orientées parallèlement à l'axe longitudinal Z, convergeant vers ce dernier, en étant angulairement décalées les unes des autres de 60°. Les pieds permettent une surélévation de la paroi inférieure 11 par rapport au support 3, ce qui favorise l'écoulement d'eau entre la paroi inférieure 11 et le support 3.

La hauteur des pieds 30, parallèlement à l'axe longitudinal Z, peut par exemple être comprise entre 1 cm et 10 cm. La hauteur des bras 20, selon l'axe longitudinal Z, peut par exemple être comprise entre 5 cm et 30 cm. Le diamètre maximal D du filtre, selon le plan radial XY, peut par exemple être compris entre 10 cm et 30 cm. Ces dimensions peuvent s'appliquer, isolément ou en combinaison, dans tous les modes de réalisation.

Sur la figure 2, on a représenté un deuxième mode de réalisation, dans lequel le filtre 1 comporte des bras 20 formant une partie de la paroi latérale 14 du filtre 1. Comme précédemment décrit, les bras 20 s'étendent entre une bordure inférieure 21, reliée à la paroi inférieure 11, et une bordure supérieure 22. Chaque bras 20 est configuré de telle sorte que la bordure supérieure 22 est apte à être rapprochée ou écartée de l'axe longitudinal Z. Les bras 20 comportent des orifices, permettant un passage de l'eau et la retenue d'éléments à filtrer. Il en est de même de la paroi inférieure 11 formant le fond du filtre. Entre chaque bras 20 s'étend une paroi complémentaire 25. Dans l'exemple représenté sur la figure 2, la paroi complémentaire 25 est pleine. Elle est souple, de façon à pouvoir se conformer à une variation de l'écartement des bras 20 par rapport à l'axe longitudinal Z. Les bras 20 sont formés selon un matériau rigide. Cependant, de même que dans le premier mode de réalisation, la bordure inférieure de chaque bras autorise un mouvement de rotation de chaque bras, de façon à ce qu'il puisse s'écarter ou se rapprocher de l'axe longitudinal Z. Dans cet exemple, la paroi complémentaire 25 comporte des tronçons élémentaire 25' disjoints les uns des autres, chaque tronçon élémentaire 25' s'étendant entre deux bras 20 adjacents.

Selon une variante, la paroi complémentaire 25 peut comporter des orifices, disposés au niveau de chaque tronçon élémentaire 25'. Chaque tronçon élémentaire 25' fait alors office de membrane filtrante. De même que dans le premier mode de réalisation, le filtre comporte un moyen d'ajustement 26 de la dimension du filtre, formé par un câble 27 et un élément de maintien 28. Le câble est configuré pour glisser dans une gorge périphérique 23, formée au niveau de l'extrémité supérieure 22 de chaque bras 20.

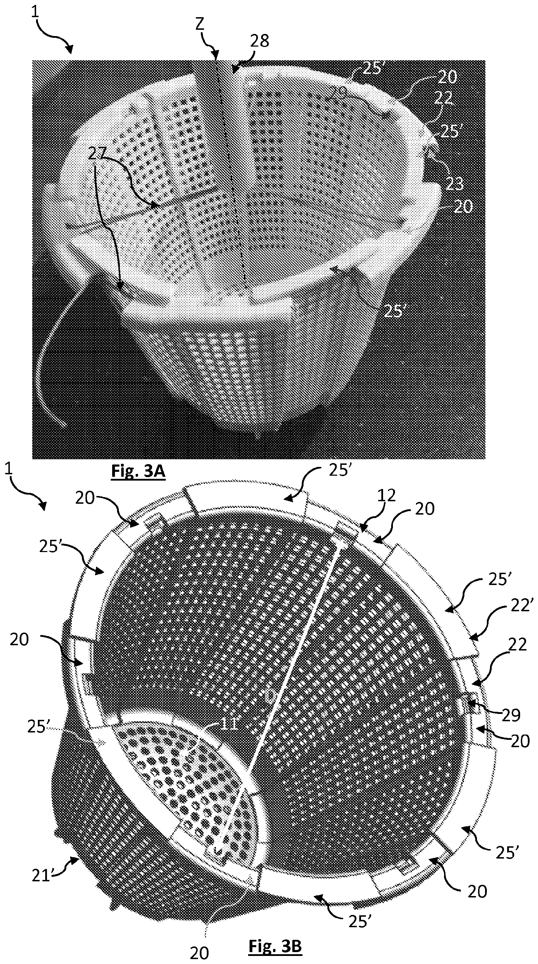

Les figures 3A à 3C représentent un troisième mode de réalisation de l'invention, selon lequel le filtre 1 comporte une paroi latérale 14 formée par des bras 20 rigides. Comme précédemment décrit, les bras 20 s'étendent entre une bordure inférieure 21, reliée à la paroi inférieure 11, et une bordure supérieure 22. La paroi latérale 14 est également formée par une paroi complémentaire 25, cette dernière comportant des tronçons élémentaires 25' disjoints les uns des autres. Chaque tronçon élémentaire 25' s'étend entre deux bras adjacents 20. Chaque tronçon élémentaire 25' est relié à la paroi inférieure 11, et comporte une bordure supérieure 22', apte à s'éloigner ou à se rapprocher de l'axe longitudinal Z.

Dans ce troisième mode de réalisation, les bras 20 et les tronçons élémentaires 25' sont rigides. Comme on peut le voir sur la figure 3A, chaque tronçon élémentaire 25' se superpose partiellement aux deux bras adjacents 20 auxquels il est relié. La partie du tronçon élémentaire se superposant à un bras 20 varie selon l'écartement du bras vis-à-vis de l'axe longitudinal Z. Plus la bordure supérieure 22 du bras se rapproche de l'axe longitudinal Z, plus la partie du tronçon élémentaire 25 se superposant au bras 20 augmente.

Le filtre comporte un moyen d'ajustement 26 permettant d'écarter ou de resserrer les bras 20. Le moyen d'ajustement 26 comporte un câble 27, passant à travers une fente 29 ménagée dans au moins un bras. Sur la figure 3A a été représenté un câble 27, relié à un bras 20. Le câble 27 passe à travers les fentes respectives 29 de trois bras, et s'engage dans la gorge périphérique 23. Un opérateur peut saisir le manchon 28, de façon à resserrer les bras 20. Comme décrit en lien avec le premier mode de réalisation, lorsque l'opérateur relâche le manchon 28, les bras s'écartent pour tendre vers leur position au repos.

De façon alternative, le moyen d'ajustement 26 peut être similaire à celui décrit en lien avec les premier et deuxième modes de réalisation.

Dans l'exemple représenté sur la figure 3A, les bras 20 et les tronçons élémentaires 25' comportent des orifices, permettant la filtration de l'eau. Selon des variantes, les bras ou les tronçons peuvent être pleins.

La disposition en alternance des bras 20 et des tronçons élémentaires 25' peut être observée sur la figure 3B. La figure 3B montre également la paroi inférieure 11, cette dernière comportant des orifices à travers lesquels peut s'écouler l'eau à filtrer.

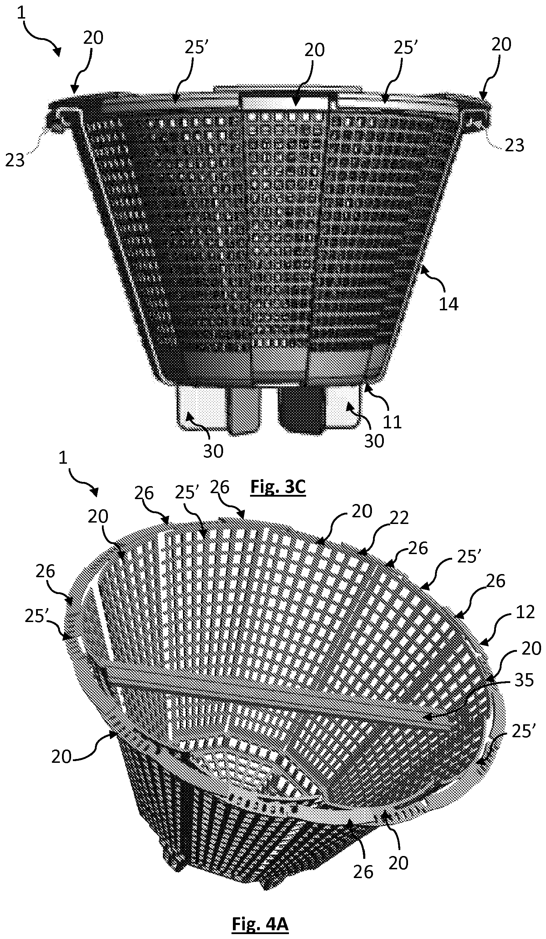

La figure 3C représente une vue de côté du filtre 1 représenté sur les figures 3A et 3B. De même que dans les précédents modes de réalisation, le filtre 1 comporte des pieds 30, s'étendant à partir de la paroi inférieure 11, parallèlement à l'axe longitudinal Z.

Le filtre tel que précédemment décrit peut être introduit dans un conduit d'admission 2 d'un système de filtration. De préférence, l'axe longitudinal Z du filtre est alors confondu avec l'axe d'admission Z' du conduit d'admission 2. La partie inférieure 11 est introduite préalablement à l'extrémité supérieure 12. La partie inférieure 11 est ainsi disposée à un niveau plus bas, par rapport à la verticale, que l'extrémité supérieure 12.

L'ajustement du diamètre D du filtre, c'est-à-dire l'ajustement du diamètre de l'extrémité supérieure 12 est réalisée avant l'introduction du filtre. Pour cela, on exerce une contrainte sur les bras 20, de façon à réduire leur inclinaison par rapport à l'axe longitudinal Z. Il en résulte une diminution du diamètre D du filtre 1. Lorsque le diamètre D du filtre est inférieur au diamètre D' du conduit d'admission 2, le filtre 1 est introduit dans le conduit d'admission 2. Après que filtre 1 a été introduit, on relâche la contrainte exercée sur les bras 20. Ces derniers tendent à gagner leur inclinaison au repos, en s'écartant de l'axe longitudinal Z. Ils s'appuient alors contre la paroi interne du conduit d'admission 2. La pression des bras exercée contre la paroi entraîne que le diamètre D du filtre 1 coïncide avec le diamètre D' du conduit d'admission 2. Ainsi, l'eau s'écoulant à travers le conduit d'admission 2 s'écoule à travers l'ouverture 13, de façon à être filtrée par le filtre 1.

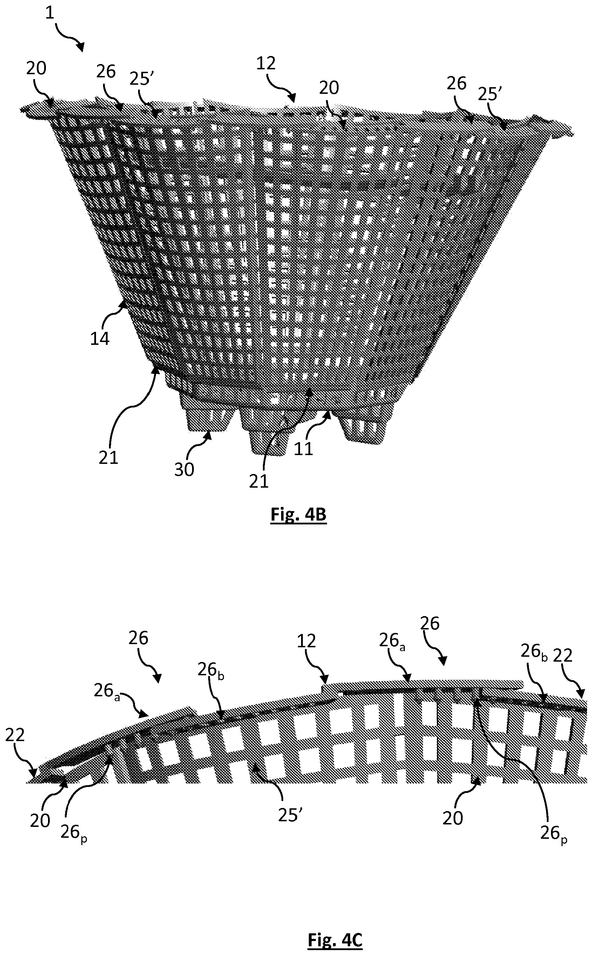

Les figures 4A à 4C représentent un autre mode de réalisation, similaire à celui représenté sur les figures 3A à 3C. Le filtre 1 comporte une paroi latérale 14 formée par des bras 20 rigides. Comme représenté sur la figure 4B, les bras 20 s'étendent entre leurs extrémités inférieures 21 respectives, situées à proximité de la paroi inférieure 11, et leurs bordures supérieures 22 respectives, formant l'extrémité supérieure 12 du filtre. La paroi latérale 14 est également formée par une paroi complémentaire 25, se présentant sous la forme de tronçons élémentaires souples ou rigides 25', disjoints les uns des autres, ayant le même aspect, et la même fonction que les bras 20. Les bras 20 et les tronçons élémentaires 25' qui leur sont adjacents se chevauchent, de façon à assurer une continuité de la filtration le long de la paroi latérale 14. Ainsi, chaque tronçon élémentaire 25' peut se superposer, partiellement, à au moins un bras 20 qui lui est adjacent. Réciproquement, chaque bras 20 peut se superposer, au moins partiellement, à un tronçon élémentaire 25' lui étant adjacent.

Sur la figure 4B, on remarque que les pieds 30, les bras 20, la paroi inférieure 11, et les tronçons élémentaires 25' sont ajourés.

Selon ce mode de réalisation, les bordures supérieures 22 des bras 20 et celles des éléments complémentaires 25' forment l'extrémité supérieure 12 du filtre, cette dernière étant de forme annulaire. Elle définit le diamètre du filtre 1.

Au niveau de l'extrémité supérieure 12, le filtre 1 comporte un moyen d'ajustement 26 de la dimension du filtre. Selon ce mode de réalisation, comme représenté sur la figure 4C, le moyen d'ajustement 26 comporte, au niveau de chaque bras 20, une patte 26ₐ, reliée au bras et s'étendant à partir de la bordure supérieure 22 du bras, parallèlement à ladite bordure supérieure, en direction du tronçon élémentaire 25' lui étant adjacent. La patte 26ₐ comporte des picots 26ₚ, pouvant s'engager dans des ouvertures 26_{b} ménagées au niveau de la bordure supérieure du tronçon élémentaire 25' adjacent. De la même façon, le filtre 1 comporte, au niveau de chaque tronçon élémentaire 25', une patte 26ₐ, reliée audit tronçon élémentaire, et s'étendant à partir de la bordure supérieure de ce dernier, parallèlement à ladite bordure supérieure, en direction du bras 20 lui étant adjacent. La patte 26ₐ comporte des picots 26ₚ, pouvant s'engager dans des ouvertures 26_{b} ménagées dans la bordure supérieure 22 du bras 20 adjacent. Ce moyen d'ajustement permet un ajustement simple et précis du diamètre D définit par l'extrémité supérieure 12 du filtre.

Le filtre comporte également une anse de maintien 35, ou poignée de maintien, s'étendant entre deux bras 20 ou entre deux tronçons élémentaires 25' ou entre un bras 20 et un tronçon élémentaire 25', de préférence diamétralement opposés. L'anse de maintien peut être souple ou rigide. Le fait que la poignée soit souple permet de se conformer à différents diamètres du filtre : l'anse peut alors présenter un rayon de courbure variable en fonction du diamètre du filtre. Elle peut être insérée dans des ouvertures pratiquées dans la paroi latérale 14, au niveau d'un bras 20 ou d'un tronçon élémentaire 25'. Une telle anse peut concerner l'ensemble des modes de réalisation précédemment décrits.

## Revendications

1. Filtre (1), destiné à être inséré dans un conduit d'admission (2) d'un système de filtration d'eau, le conduit d'admission (2) s'étendant autour d'un axe d'admission (Z'), selon un diamètre d'admission (D'), le conduit d'admission (2) étant configuré pour collecter l'eau à filtrer, le filtre (1) s'étendant autour d'un axe longitudinal (Z), et comportant :
- une extrémité supérieure annulaire (12), délimitant une ouverture (13) autour de l'axe longitudinal (Z), pour permettre une admission d'eau dans le filtre, l'extrémité supérieure annulaire définissant un diamètre du filtre (D) ;
- une paroi inférieure (11), formant un fond du filtre, s'étendant face à l'ouverture (13) ;
- une paroi latérale (14), s'étendant entre l'extrémité supérieure (12) et la paroi inférieure (11), autour de l'axe longitudinal (Z) ;
- la paroi latérale et/ou la paroi inférieure comportant des orifices, de façon à permettre un écoulement de l'eau à travers les orifices et à retenir des éléments solides, dont la taille est supérieure à une taille de filtration, définie par les orifices ;
le filtre étant **caractérisé en ce que** la paroi latérale (14) comporte :
- une pluralité de bras (20), chaque bras s'étendant, entre un bord inférieur (21) relié à la paroi inférieure (11), et un bord supérieur (22), le bord supérieur (22) formant une partie de l'extrémité supérieure annulaire (12) ;
- chaque bras (20) s'étendant de la paroi inférieure (11) vers l'extrémité supérieure (12), en s'écartant de l'axe longitudinal (Z), selon une inclinaison (a), l'inclinaison entre chaque bras (20) et l'axe longitudinal (Z) étant ajustable, de façon que le diamètre de l'extrémité supérieure (12) est variable en fonction de l'inclinaison de chaque bras ;
de telle sorte que lorsque le filtre est inséré dans le conduit d'admission, l'axe longitudinal (Z) étant parallèle à l'axe d'admission (Z'), l'inclinaison des bras est ajustée de façon que le diamètre (D) de l'extrémité supérieure (12) est adapté au diamètre d'admission (D').

2. Filtre selon la revendication 1, comportant une paroi complémentaire, s'étendant entre chaque bras.

3. Filtre selon l'une quelconque des revendications précédentes, dans lequel chaque bras (20) est tel qu'en l'absence de contrainte exercée sur le bras, il tend à s'étendre, par rapport à l'axe longitudinal (Z), selon un angle d'inclinaison (α₀), dit angle d'inclinaison au repos.

4. Filtre (1) selon l'une quelconque des revendications précédentes, tel que la paroi inférieure (11) présente un diamètre, perpendiculairement à l'axe longitudinal (Z), strictement inférieur au diamètre (D) de l'extrémité supérieure (12).

5. Filtre (1) selon l'une quelconque des revendications précédentes, dans lequel la paroi complémentaire (25) comporte des tronçons élémentaires (25'), chaque tronçon élémentaire s'étendant entre deux bras adjacents (20), en étant relié à ces derniers.

6. Filtre selon la revendication 5, dans lequel au moins un tronçon élémentaire (25') comporte des orifices, de façon à permettre l'écoulement de l'eau à travers ces derniers.

7. Filtre selon l'une quelconque des revendications 5 ou 6, dans lequel chaque tronçon élémentaire est partiellement superposé à un bras (20) auquel il est relié.

8. Filtre selon l'une quelconque des revendications précédentes, dans lequel au moins deux bras (20) sont reliés à un moyen d'ajustement (26), pour rapprocher ou éloigner les bras de l'axe longitudinal (Z).

9. Filtre selon la revendication 8, dans lequel le moyen d'ajustement (26) comporte un câble (27), relié à au moins deux bras, et dont l'actionnement permet de rapprocher ou d'éloigner les bras de l'axe longitudinal (Z).

10. Filtre selon la revendication 9, dans lequel au moins deux bras présentent, au niveau de leur bord supérieure (22), une gorge (23), configurée de telle sorte que le câble (27) peut glisser dans la gorge.

11. Filtre selon l'une quelconque des revendications précédentes, dans lequel la paroi complémentaire (25) est formée par une membrane filtrante, s'étendant contre la paroi inférieure (11) et contre chaque bras (20).

12. Filtre selon l'une quelconque des revendications précédentes, comportant au moins un pied (30), relié à la paroi inférieure (11), et s'étendant à partir de cette dernière, le pied étant configuré pour s'appuyer à l'intérieur du conduit d'admission (2).

13. Procédé d'insertion d'un filtre (1), selon l'une quelconque des revendications précédentes, dans un conduit d'admission (2) d'un système de filtration (1), le conduit d'admission s'étendant autour d'un axe d'admission (Z'), selon un diamètre d'admission (D'), le procédé comportant :
- un ajustement du diamètre (D) du filtre en exerçant une contrainte sur des bras (20) du filtre, pour rapprocher ces derniers de l'axe longitudinal du filtre (1), de façon à obtenir un diamètre de l'extrémité supérieure inférieur au diamètre d'admission (D') ;
- une insertion du filtre (1) dans le conduit d'admission (2), l'axe longitudinal (Z) du filtre étant confondu avec l'axe d'admission (Z'), l'insertion étant telle que la paroi inférieure (11) est disposée à un niveau plus bas, par rapport à la verticale, que l'extrémité supérieure (12) ;
- après l'insertion, un relâchement des bras, de telle sorte que les bras tendent à s'écarter de l'axe longitudinal (Z), pour venir s'appuyer contre le conduit d'admission (2).

## Patentansprüche

1. Filter (1), der dazu bestimmt ist, in eine Einlassleitung (2) eines Wasserfiltrationssystems eingefügt zu werden, wobei sich die Einlassleitung (2) gemäß einem Einlassdurchmesser (D') um eine Einlassachse (Z') erstreckt, wobei die Einlassleitung (2) dazu konfiguriert ist, das zu filtrierende Wasser zu sammeln, wobei sich der Filter (1) um eine Längsachse (Z) erstreckt, und umfassend:
- ein ringförmiges oberes Ende (12), das eine Öffnung (13) um die Längsachse (Z) begrenzt, um einen Einlass von Wasser in den Filter zu ermöglichen, wobei das ringförmige obere Ende einen Durchmesser des Filters (D) definiert;
- eine untere Wand (11), die einen Boden des Filters bildet und sich gegenüber der Öffnung (13) erstreckt;
- eine Seitenwand (14), die sich zwischen dem oberen Ende (12) und der unteren Wand (11) um die Längsachse (Z) erstreckt;
- wobei die Seitenwand und/oder die untere Wand Löcher umfassen, sodass das Wasser durch die Löcher strömen kann und Festkörper, deren Größe größer als eine durch die Löcher definierte Filtrationsgröße ist, zurückgehalten werden;
wobei der Filter **dadurch gekennzeichnet ist, dass** die Seitenwand (14) Folgendes umfasst:
- eine Vielzahl von Armen (20), wobei sich jeder Arm zwischen einem unteren Rand (21), der mit der unteren Wand (11) verbunden ist, und einem oberen Rand (22) erstreckt, wobei der obere Rand (22) einen Teil des ringförmigen oberen Endes (12) bildet;
- wobei sich jeder Arm (20) von der unteren Wand (11) zu dem oberen Ende (12) erstreckt und sich dabei gemäß einer Neigung (a) von der Längsachse (Z) entfernt, wobei die Neigung zwischen jedem Arm (20) und der Längsachse (Z) einstellbar ist, sodass der Durchmesser des oberen Endes (12) in Abhängigkeit von der Neigung jedes Arms variabel ist;
sodass, wenn der Filter in die Einlassleitung eingefügt wird, wobei die Längsachse (Z) parallel zu der Einlassachse (Z') ist, die Neigung der Arme so eingestellt wird, dass der Durchmesser (D) des oberen Endes (12) an den Einlassdurchmesser (D') angepasst ist.

2. Filter nach Anspruch 1, umfassend eine Zusatzwand, die sich zwischen jedem Arm erstreckt.

3. Filter nach einem der vorhergehenden Ansprüche, wobei jeder Arm (20), wenn keine Kraft auf den Arm ausgeübt wird, dazu tendiert, sich mit Bezug auf die Längsachse (Z) gemäß einem Neigungswinkel (α₀), der als Neigungswinkel im Ruhezustand bezeichnet wird, zu erstrecken.

4. Filter (1) nach einem der vorhergehenden Ansprüche, wobei die untere Wand (11) einen zu der Längsachse (Z) senkrechten Durchmesser aufweist, der in jedem Fall kleiner als der Durchmesser (D) des oberen Endes (12) ist.

5. Filter (1) nach einem der vorhergehenden Ansprüche, wobei die Zusatzwand (25) Teilstücke (25') umfasst, wobei sich jedes Teilstück zwischen zwei benachbarten Armen (20) erstreckt und mit diesen verbunden ist.

6. Filter nach Anspruch 5, wobei mindestens ein Teilstück (25') Löcher umfasst, sodass das Wasser durch diese hindurch strömen kann.

7. Filter nach einem der Ansprüche 5 oder 6, wobei jedes Teilstück einen Arm (20), mit dem es verbunden ist, teilweise überlagert.

8. Filter nach einem der vorhergehenden Ansprüche, wobei mindestens zwei Arme (20) mit einem Einstellmittel (26) verbunden sind, um die Arme zu der Längsachse (Z) hin oder von ihr weg zu bewegen.

9. Filter nach Anspruch 8, wobei das Einstellmittel (26) ein Kabel (27) umfasst, das mit mindestens zwei Armen verbunden ist und dessen Betätigung eine Bewegung der Arme zu der Längsachse (Z) hin oder von ihr weg ermöglicht.

10. Filter nach Anspruch 9, wobei mindestens zwei Arme im Bereich ihres oberen Randes (22) eine Rille (23) aufweisen, die so konfiguriert ist, dass das Kabel (27) in der Rille gleiten kann.

11. Filter nach einem der vorhergehenden Ansprüche, wobei die Zusatzwand (25) durch eine Filtermembran gebildet ist, die sich gegen die untere Wand (11) und gegen jeden Arm (20) erstreckt.

12. Filter nach einem der vorhergehenden Ansprüche, umfassend mindestens einen Fuß (30), der mit der unteren Wand (11) verbunden ist und sich von dieser erstreckt, wobei der Fuß dazu konfiguriert ist, sich im Inneren der Einlassleitung (2) abzustützen.

13. Verfahren zum Einfügen eines Filters (1) nach einem der vorhergehenden Ansprüche in eine Einlassleitung (2) eines Filtrationssystems (1), wobei sich die Einlassleitung gemäß einem Einlassdurchmesser (D') um eine Einlassachse (Z') erstreckt, wobei das Verfahren Folgendes umfasst:
- Einstellen des Durchmessers (D) des Filters, indem auf Arme (20) des Filters eine Kraft ausgeübt wird, um diese zu der Längsachse des Filters (1) hin zu bewegen, um einen Durchmesser des oberen Endes zu erhalten, der kleiner als der Einlassdurchmesser (D') ist;
- Einfügen des Filters (1) in die Einlassleitung (2), wobei die Längsachse (Z) des Filters mit der Einlassachse (Z') zusammenfällt, wobei das Einfügen derart erfolgt, dass sich die untere Wand (11) mit Bezug auf die Vertikale auf einem tieferen Niveau als das obere Ende (12) befindet;
- nach dem Einfügen, Loslassen der Arme, sodass die Arme dazu tendieren, sich von der Längsachse (Z) weg zu bewegen, um an der Einlassleitung (2) zur Anlage zu kommen.

## Claims

1. Filter (1), intended to be inserted in an inlet duct (2) of a water filtration system, the inlet duct (2) extending around an inlet axis (Z'), with an inlet diameter (D'), the inlet duct (2) being configured to collect the water to be filtered, the filter (1) extending around a longitudinal axis (Z), and comprising:
- an annular upper end (12), delimiting an opening (13) around the longitudinal axis (Z), to allow an admission of water into the filter, the annular upper end defining a filter diameter (D);
- a bottom wall (11), forming a bottom of the filter, extending opposite the opening (13);
- a side wall (14), extending between the upper end (12) and the bottom wall (11), around the longitudinal axis (Z);
- the side wall and/or the bottom wall having orifices, so as to allow a flow of water through the orifices and to retain solid elements, the size of which is greater than a filtration size, defined by the orifices;
the filter being **characterized in that** the side wall (14) has:
- a plurality of arms (20), each arm extending, between a lower edge (21) connected to the bottom wall (11), and an upper edge (22), the upper edge (22) forming part of the annular upper end (12);
- each arm (20) extending from the bottom wall (11) towards the upper end (12), away from the longitudinal axis (Z), at an inclination (a), the inclination between each arm (20) and the longitudinal axis (Z) being adjustable, so that the diameter of the upper end (12) is variable according to the inclination of each arm;
such that when the filter is inserted into the inlet duct, the longitudinal axis (Z) being parallel to the inlet axis (Z'), the inclination of the arms is adjusted so that the diameter (D) of the upper end (12) is adapted to the inlet diameter (D').

2. Filter according to claim 1, having a complementary wall extending between each arm.

3. Filter according to any one of the preceding claims, in which each arm (20) is such that, in the absence of stress on the arm, it tends to extend, with respect to the longitudinal axis (Z), at an angle of inclination (α₀), called the angle of inclination at rest.

4. Filter (1) according to any one of the preceding claims, such that the bottom wall (11) has a diameter, perpendicular to the longitudinal axis (Z), strictly less than the diameter (D) of the upper end (12).

5. Filter (1) according to any one of the preceding claims, wherein the complementary wall (25) comprises elementary sections (25'), each elementary section extending between two adjacent arms (20) and being connected thereto.

6. Filter according to claim 5, wherein at least one elementary section (25') has orifices, so as to allow the flow of water therethrough.

7. Filter according to any one of claims 5 or 6, in which each elementary section, and an arm (20) to which it is connected, partially overlap.

8. Filter according to any of the preceding claims, wherein at least two arms (20) are connected to an adjusting means (26), for moving the arms towards or away from the longitudinal axis (Z).

9. Filter according to claim 8, wherein the adjusting means (26) comprises a wire (27), connected to at least two arms, the actuation of which allowing the arms to be moved towards or away from the longitudinal axis (Z).

10. Filter according to claim 9, wherein at least two arms have, at their upper edge (22), a groove (23), so that the wire (27) can slide into the groove.

11. Filter according to any of the preceding claims, wherein the complementary wall (25) is formed by a filter membrane, extending against the bottom wall (11) and against each arm (20).

12. Filter according to any of the preceding claims, comprising at least one leg (30), connected to and extending from the bottom wall (11), the leg being configured to rest within the inlet duct (2).

13. Method of inserting a filter (1), according to any one of the preceding claims, into an inlet duct (2) of a filtration system (1), the inlet duct extending around an inlet axis (Z'), according to an inlet diameter (D'), the method comprising:
- adjusting of the diameter (D) of the filter by exerting a stress on arms (20) of the filter, to bring the latter closer to the longitudinal axis of the filter (1), so as to obtain an upper end diameter smaller than the inlet diameter (D');
- inserting the filter (1) in the inlet duct (2), the longitudinal axis (Z) of the filter being coincident with the inlet axis (Z'), the insertion being such that the bottom wall (11) is disposed at a lower level, relative to the vertical, than the upper end (12);
- after the insertion, releasing the arms so that the arms tend to move away from the longitudinal axis (Z) so as to rest against the inlet duct (2).
